# EUROPEAN PATENT APPLICATION

(11) **EP 4 534 868 A1**
(43) Date of publication of application: **09.04.2025**
(21) Application number: 23816017.0
(22) Date of filing: 29.05.2023
(51) Int. Cl.: F16C 33/32, C04B 35/111, C04B 35/569, C04B 35/587

(54) **MATERIAL FOR CERAMIC BALL, METHOD FOR PRODUCING CERAMIC BALL USING SAME, AND CERAMIC BALL**

(30) Priority: 31.05.2022 JP 2022088523
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: FUNAKI, Kai, Yokohama-shi, Kanagawa 235-0032 (JP); SATO, Hideki, Yokohama-shi, Kanagawa 235-0032 (JP)
(74) Representative: Hoffmann Eitle
(86) International application number: PCT/JP2023/019928
(87) International publication number: WO 2023/234260

(57) **Abstract**

A ceramic ball material according to an embodiment includes a spherical portion; and a band-shaped portion formed over a circumference of a surface of the spherical portion. In the ceramic ball material, the ceramic ball material has a ratio Rab/Rap of 0.70 or more and 1.03 or less, where Rab denotes an arithmetic average roughness on an outer peripheral surface of the band-shaped portion; and Rap denotes an arithmetic average roughness on an outer peripheral surface of the spherical portion.

## Description

### TECHNICAL FIELD

Embodiments described later relate to a ceramic ball material, a method for manufacturing a ceramic ball, and a ceramic ball.

### BACKGROUND ART

Various ceramic materials have properties such as high hardness, insulation, and wear resistance. In particular, fine ceramics with enhanced purity and uniform particle size exhibits properties applicable in various fields of, for example, capacitors, actuator materials, and refractories. Products for ball application are those that takes advantage of the properties of ceramic materials, wear resistance and insulation, and include bearings, jigs, tools, gauges, solenoid valves, check valves, and other valves. Of these, products for bearing ball application are made of ceramic materials such as aluminum oxide, silicon nitride, and zirconium oxide. For example, Japanese Patent Laid-Open No. 6-48813 (Patent Document 1) and Japanese Patent No. 2764589 (Patent Document 2) each disclose a bearing ball made of silicon nitride material, while Japanese Patent Laid-Open No. 60-18620 (Patent Document 3) discloses a bearing ball made of zirconium oxide material.

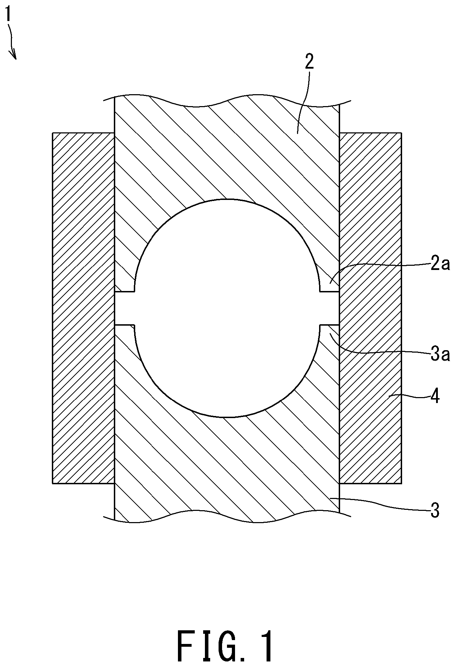

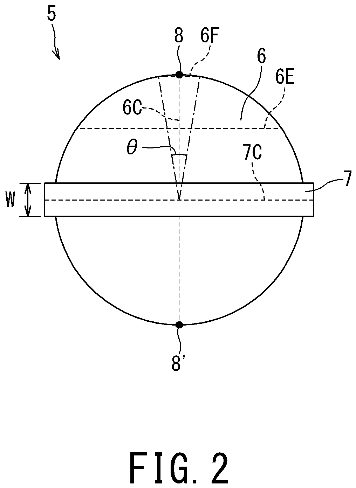

In the process of manufacturing these bearing ball materials, a method of sintering a green compact is employed. A forming method for obtaining the green compact is press forming using a mold. Generally, the press forming is a method of inserting powder into a cavity between an upper punch 2 and a lower punch 3 and then applying pressure thereto by using a press molding apparatus including the upper punch 2, the lower punch 3 and a die 4 as illustrated in FIG. 1. During the press forming, there must be a gap between a tip 2a of the upper punch 2 and a tip 3a of the lower punch 3 to protect the molds. As a result, a spherical portion and a band-shaped portion are formed in the green compact to be obtained by press molding. For example, Japanese Patent No. 4761613 (Patent Document 4) discloses a bearing ball material including a spherical portion and a band-shaped portion, which is obtained by sintering a green compact with the spherical portion and the band-shaped portion. FIG. 2 illustrates a conventional ceramic ball material. In FIG. 2, reference numeral 5 denotes the ceramic ball material, 6 denotes the spherical portion, and 7 denotes the band-shaped portion.

### PRIOR ART DOCUMENTS

### PATENT DOCUMENT

Patent Document 1: Japanese Patent Laid-Open No. 6-48813
Patent Document 2: Japanese Patent No. 2764589
Patent Document 3: Japanese Patent Laid-Open No. 60-18620
Patent Document 4: Japanese Patent No. 4761613

### SUMMARY OF THE INVENTION

### PROBLEMS TO BE SOLVED BY THE INVENTION

The ceramic ball material 5 with the spherical portion 6 and the band-shaped portion 7 after the sintering process, as illustrated in FIG. 2, is polished to obtain a ceramic ball. The ceramic ball material 5 with the spherical portion 6 and the band-shaped portion 7 is sometimes referred to as a preprocessed ball. For example, the ceramic ball material 5 is polished by mirror finishing with an arithmetic average roughness Ra of 0.1 µm or less. The mirror finishing involves machining using surface plate.

In general, ceramic materials are manufactured by forming ceramic powder, followed by sintering by heat treatment. Ceramics undergo large shrinkage during sintering, but it is difficult to uniformly form and sinter a ceramic product in an ideal state, making microstructural unevenness more likely to occur inside the ceramics due to uneven density and generation of pores. The ceramic ball material 5 is sintered after being formed into a shape other than a perfect sphere by powder press forming, then shaped into a perfect sphere, and polished by mirror finishing on the surface. Therefore, the ceramic ball material 5 has microstructural unevenness resulting from uneven formation by powder press forming inside, causing defects in a ceramic ball product.

The present invention solves such problems and provides a ceramic ball with a high processing yield in polishing by using a ceramic ball material 5 having suppressed microstructural unevenness during the sintering of ceramic materials to be subjected to powder press forming.

### MEANS FOR SOLVING THE PROBLEMS

A ceramic ball material according to an embodiment includes a spherical portion; and a band-shaped portion formed over a circumference of a surface of the spherical portion. In the ceramic ball material, the ceramic ball material has a ratio Rab/Rap of 0.70 or more and 1.03 or less, where Rab denotes an arithmetic average roughness on an outer peripheral surface of the band-shaped portion; and Rap denotes an arithmetic average roughness on an outer peripheral surface of the spherical portion.

### BRIEF DESCRIPTION OF THE DRAWINGS

FIG. 1 is a cross-sectional view illustrating an example of a general mold press forming apparatus.
FIG. 2 is an external view illustrating an example of a ceramic ball material according to an embodiment.
FIG. 3 is an external view illustrating an example of a die of a mold press forming apparatus according to an embodiment.
FIG. 4 is a cross-sectional view illustrating an example of cold isostatic pressing rubber forming according to an embodiment.
FIG. 5 is a cross-sectional view illustrating an example of a hole and a green compact laid in a cold isostatic pressing rubber forming.
FIG. 6 is a cross-sectional view illustrating an example of a hole and a green compact laid in a cold isostatic pressing rubber forming according to an embodiment.

### DESCRIPTION OF EMBODIMENTS

Hereinafter, embodiments of a ceramic ball material, a method for manufacturing a ceramic ball using the same, and a ceramic ball are described in detail with reference to the drawings.

A ceramic ball material according to an embodiment includes a spherical portion; and a band-shaped portion formed over a circumference of a surface of the spherical portion. In the ceramic ball material, the ceramic ball material has a ratio Rab/Rap of 0.70 or more and 1.03 or less, where Rab denotes an arithmetic average roughness on an outer peripheral surface of the band-shaped portion; and Rap denotes an arithmetic average roughness on an outer peripheral surface of the spherical portion.

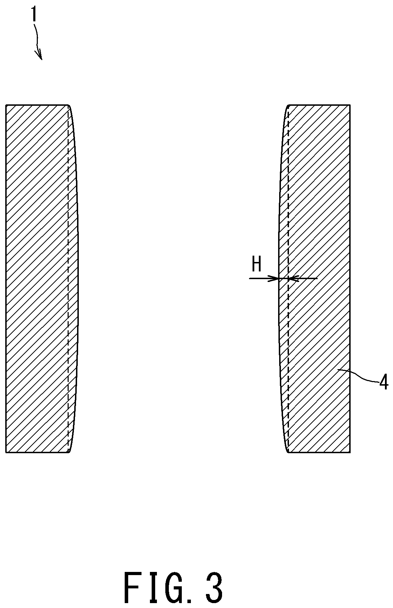

FIG. 2 is a schematic view of a ceramic ball material according to an embodiment. In FIG. 2, reference numeral 5 denotes the ceramic ball material according to the embodiment, 6 denotes the spherical portion, and 7 denotes the band-shaped portion. In FIG. 2, reference character 7C denotes a profile that extends in the circumferential direction of the outer peripheral surface (outermost surface) formed by the band-shaped portion 7 and passes through the center of the width W of the outer peripheral surface. In FIG. 2, reference numeral 8 denotes one of two poles (8 and 8') at a position (position, 90° from the profile 7C) farthest from a surface formed by the profile 7C on the outer peripheral surface (outermost surface) of the spherical portion 6. Of the arithmetic average roughness Ra, Rab denotes the arithmetic average roughness on the outer peripheral surface of the band-shaped portion 7; and Rap denotes the arithmetic average roughness on the outer peripheral surface of the spherical portion 6, for example, the pole 8. Hereinafter, a description is made on the assumption that the arithmetic average roughness on the outer peripheral surface of the spherical portion 6 is the arithmetic average roughness of the pole 8 unless otherwise specified. Reference character W denotes the width of the band-shaped portion 7. The width W of the band-shaped portion 7 is sometimes simply referred to as "width W". In FIG. 3, the seizes of the height and width of the band-shaped portion 7 with respect to the spherical portion 6 are illustrated for the purpose of description.

The ceramic ball material 5 includes the spherical portion 6 and the band-shaped portion 7. The band-shaped portion 7 is formed over the circumference of the surface of the spherical portion 6. The circumference of the surface of the spherical portion 6 may be any one of multiple circumferences of the surface of the spherical portion 6. The surface of the spherical portion 6 being a quadric surface is sufficient. Therefore, the spherical portion 6 may be a true sphere or an ellipsoid. The band-shaped portion 7 is provided on the circumference of the spherical portion 6. The width W of the band-shaped portion 7 is, for example, the largest width of the band-shaped portion 7 but may be the average of widths at multiple positions.

When Rap denotes the arithmetic average roughness of the pole 8, and Rab denotes the arithmetic average roughness on the outer peripheral surface of the band-shaped portion 7, Rab/Rap, a ratio of Rab to Rap, is within a range of 0,70 or more and 1.03 or less. When Rab/Rap is within this range, microstructural unevenness in the spherical portion 6 and the band-shaped portion 7 during sintering, which is mainly caused by powder press forming, is suppressed. By suppressing microstructural unevenness during sintering, it is possible to reduce defects due to polishing. Therefore, Rab/Rap is preferably 0.70 or more and 1.03 or less, more preferably 0.80 or more and 1.00 or less, and even more preferably 0.90 or more and 1.00 or less.

If Rab/Rap is less than 1.00, the density of the band-shaped portion 7 of the ceramic ball material 5 is larger than that of the spherical portion, making the band-shaped portion 7 less easy to polish (for example, machining using surface plate). In particular, if Rab/Rap is less than 0.70, the band-shaped portion 7 becomes considerably less easy to polish, unacceptably increasing the polishing time during the polishing time (deteriorating polishing efficiency). Furthermore, if Rab/Rap is less than 0.70, brittle fracture is likely to occur when the band-shaped portion 7 comes into contact with a grinding stone during polishing. In particular, brittle fracture is more likely to occur in contact of the ceramic ball material 5 with the surface plate for machining using surface plate.

On the other hand, if Rab/Rap exceeds 1.03, unevenness in density and microstructure occurs inside the ceramic ball material 5, resulting in the occurrence of defects such as holes and abnormal structures on the bearing ball surface after polishing.

Here, a method of measuring the arithmetic average roughness Rab on the outer peripheral surface of the band-shaped portion 7 and the arithmetic average roughness Rap of the pole 8 in the ceramic ball material 5 is described. The arithmetic average roughness Ra is based on JIS B 0601 (2013) "Geometrical Product Specifications (GPS) - Surface texture: Profile method - Terms, definitions and surface texture parameters".

The arithmetic average roughness Ra is measured using a surface roughness measuring machine. The surface roughness measuring machine to be used is SURFCOM2000 manufactured by TOKYO SEIMITSU CO., LTD.**,** and the measurement is carried out using the evaluation and analysis software of the same machine. The measuring apparatus may have an equivalent function.

The measurement distance of the arithmetic average roughness Ra, i.e., a reference length U, is 10 to 25% of the diameter of the ceramic ball material 5, and the reference length U of the spherical portion 6 is the same as that of that of band-shaped portion 7. The measurement conditions are as follows: a measurement cutoff wavelength of 0.08 mm, a Gaussian cutoff type, a least-squares linear correction for slope correction, a λs cutoff ratio of 300, and a λs cutoff wavelength of 0.2667 µm.

A measurement area of the arithmetic average roughness Rap of the pole has a length corresponding to the reference length U at a position centered at the pole 8 on a profile 6C. Accordingly, even if the ceramic ball material 5 is a perfect sphere or an ellipsoid, similar values can be obtained regardless of the position or direction where the measurement is made. In a case where measurement cannot be made at the pole 8 (or the pole 8') due to the presence of a defect or the like, the measurement can be performed on the external surface of the spherical cap from a position 6E (45° position, that is, the bottom surface when the apex angle θ of the cone with the center point of the ceramic ball material 5 as the apex is 45° × 2) to the pole 8 which is at half the distance from the profile 7C to the pole 8. The measurement can also be performed on the external surface of the spherical cap from a position 6F (15° position, that is, the bottom surface when the apex angle θ of the cone with the center point of the ceramic ball material 5 as the apex is 15° × 2) to the pole 8. The apex angle means an apex angle of an isosceles triangle formed when the cone is cut off by a plane passing through an axis of rotation.

A measurement area of the arithmetic average roughness Rab on the outer peripheral surface of the band-shaped portion 7 has a length corresponding to the reference length U at an arbitrary position of a profile 7C. The measurement is performed along the profile 7C or perpendicular to the profile 7C. In the latter case, the profile 7C is substantially at the center of the measurement area. It is preferable to exclude 10% of one end portion and 10% of the other end portion in the width direction of the outer peripheral surface of the band-shaped portion 7 from the measurement points because defects such as chipping are likely to occur and affect measured values. The reference length U of the arithmetic average roughness Ra does not need to be the entire profiles 6C and 7C on the outer peripheral surface, but may be a part (e.g., about 1 mm to 20 mm) of the profiles 6C and 7C.

The spherical portion 6 of the ceramic ball material 5 preferably has an arbitrary diameter of 0.5 mm or more. When the spherical portion 6 has an arbitrary diameter of less than 0.5 mm, it becomes difficult to control a powder press mold for forming the band-shaped portion 7. Thus, the spherical portion 6 preferably has a diameter of 1 mm or more. The diameter is more preferably 2 mm or more.

The ceramic ball material 5 preferably contains any one or more of aluminum oxide (Al₂O₃), silicon nitride (Si₃N₄), silicon carbide (SiC), boron nitride (BN), and zirconium oxide (ZrO₂) in an amount of 85% by mass or more. The ceramic ball material 5 is made of a ceramic sintered body. The content in the ceramic sintered body is 85% by mass or more of any one or more of aluminum oxide, silicon nitride, silicon carbide, boron nitride, and zirconium oxide. In other words, the ceramic sintered body may contain 15% by mass or less of substances other than those mentioned above. The ceramic ball material 5 preferably contains 85% by mass or more of silicon nitride.

For example, the aluminum oxide sintered body, silicon nitride sintered body, boron nitride sintered body, zirconium oxide sintered body, and Alusil sintered body are used as bearing balls. The Alusil sintered body is a sintered body in which aluminum oxide is mixed with zirconium oxide. Among them, bearing balls made of the silicon nitride sintered body have the best wear resistance. For instance, aluminum oxide, zirconium oxide, and Alusil have a Vickers hardness of about 1200 to 1700 but a low fracture toughness value of about 3 to 6 MPa·m^{1/2}. On the other hand, the silicon nitride sintered body has a Vickers hardness of 1400 to 1800 and a high fracture toughness value of 5 to 10 MPa·m^{1/2}. The silicon nitride sintered body has both high toughness and Vickers hardness, and is therefore excellent in wear resistance. The silicon nitride sintered body has a structure mainly composed of β-type silicon nitride crystal particles. The β-type silicon nitride crystal particles have long and narrow shapes, in which a high toughness value is achieved by complexb-intertwining of long and narrow crystal particles.

Next, a method for manufacturing the ceramic ball material 5 is described. The manufacturing method is not particularly limited as long as the ceramic ball material 5 according to the embodiment satisfies the above configuration, but the following manufacturing method is a method for efficiently manufacturing the ceramic ball material 5. The method for manufacturing the ceramic ball material 5 is described with the case of using a silicon nitride sintered body as an example.

First, a sintering aid, additive, solvent, binder, and the like are added in appropriate quantities to silicon nitride as a raw material, then mixed, crushed, and granulated with a spray dryer. Through this process, the granulated powder is prepared as the raw material powder. When the total of the silicon nitride powder and the sintering aid powder is 100% by mass, the silicon nitride powder is preferably 85% by mass or more. The additive is a plasticizer. The solvent is water or an organic solvent. Examples of the organic solvent include alcohol, ketone, and benzene. The binder is a paraffin wax-based binder. Another binder for ceramic granulation is a polyvinyl alcohol (PVA)-based binder, which tends to become hard when granulated due to its slightly high glass transition temperature of 85 degrees Celsius. Therefore, it is difficult to make an adjustment such as lowering the outlet temperature of a spray dryer for the granulated powder, which is soft and easy to be crushed. The amount of the binder added is in the range of 3 to 20 parts by mass when the total of the silicon nitride powder and the sintering aid powder is 100 parts by mass.

By making the granulated powder easily crushed, the granulated powder is more likely to be crushed in the vertical direction of the press than usual. When the granulated powder is more likely to be crushed in the vertical direction, the vicinity of the surface of the pole portion becomes dense and close to the surface state of the band-shaped portion. However, if the granulated powder is simply made easily crushed, the packability of the granulated powder into the press mold decreases, which might affect the productivity. Therefore, it is necessary to make the granulated powder easily crushed without impairing the packability of the granulated powder. A method of making the granulated powder easily crushed includes adjusting the average particle size other than making an adjustment by the binder type described above. The granulated powder usually obtained with a spray dryer generally has a normal distributed, with the distribution concentrated around the average. Small granules in this distribution dry quickly and are thus often hard. Therefore, it is also possible to remove the granulated powder with a small particle size by classification to make the whole granulated powder more easily crushed.

Next, press forming is performed using the prepared granulated powder, examples of which include a forming method using the upper punch 2, the lower punch 3, and the die 4 of the mold press forming apparatus as illustrated in FIG. 1. The spherical shape inside the punches becomes the spherical portion 6 of the ceramic ball material 5 by filling the granulated powder and applying pressure in the vertical direction to the upper punch 2 and the lower punch 3. The planar shape inside the tip 2a of the upper punch 2, the tip 3a of the lower punch 3, and the die 4 becomes the band-shaped portion 7 of the ceramic ball material 5. The inside of the cross section of the die 4 is straight, but is preferably slightly convex as illustrated in FIG. 3**.** If the height of the convex portion is H, the size of H is preferably 0.01 mm or more and 0.10 mm or less. This convex portion applies pressure to the band-shaped portion 7 of the ceramic ball material 5 after the sintering process and increases the sintering density of the band-shaped portion 7, resulting in a smaller arithmetic average roughness. If the height of H is less than 0.01, the effect of applying the pressure is limited. If the height is more than 0.10 mm, the effect of applying becomes large, but the load on the mold increases, which might result in a shorter life of the mold.

By adjusting the shape of the tip 2a of the upper punch 2 and the tip 3a of the lower punch 3 at the time of press forming and the amount of powder filled, it is possible to adjust the width W and height of the band-shaped portion 7 of the ceramic ball material 5. Similarly, the diameter in the direction of a spherical portion 14 and the diameter in the direction of a band-shaped portion 15 can be adjusted in the green compact 13.

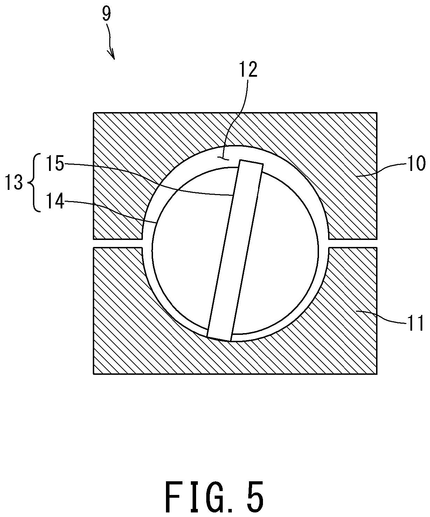

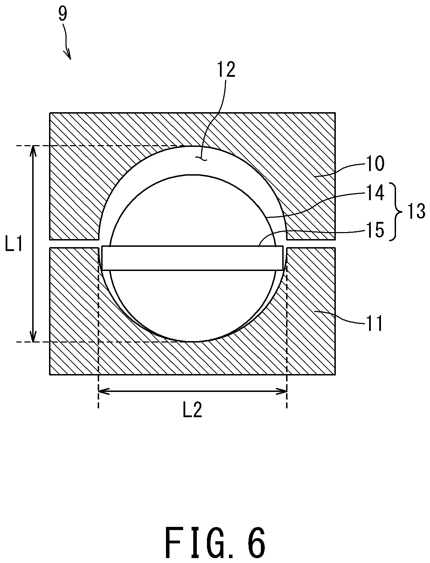

The green compact 13 obtained by press forming has the spherical portion 14 and the band-shaped portion 15. The spherical portion 14 and band-shaped portion 15 (illustrated in FIGS. 5 and 6) of the green compact 13 correspond to the spherical portion 6 and band-shaped portion 7 (illustrated in FIG. 2) of the ceramic ball material 5 described above, respectively.

It is also preferable to perform isostatic pressure forming on the green compact after the press molding. Through isostatic pressure forming, it is possible to uniformly apply compression to the granulated powder in the green compact, thereby reducing the remaining crushed granulated powder in the green compact. By reducing the remaining crushed granulated powder, it is possible to control the shrinkage rate in the sintering process.

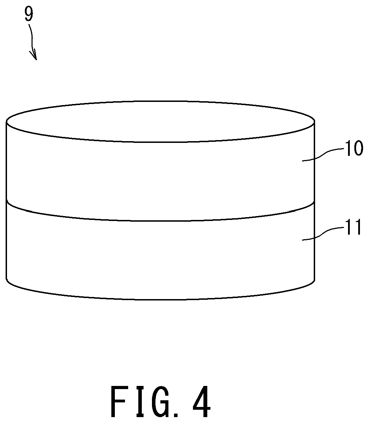

An isostatic pressure forming method using rubber dies is described as an example of isostatic pressure forming. FIG. 4 illustrates an example of a disk-shaped rubber die 9. FIG. 4 is a side view of the upper rubber die 10 and the lower rubber die 11 in a stacked state. FIG. 5 is a cross-sectional view illustrating an example in which the green compact 13 is placed in the spherical portion space 12 within the upper rubber die 10 and the lower rubber die 11.

The disk-shaped rubber die 9 has hemispherical holes on both surfaces that are larger than the maximum diameter of the green compact by about 1% or more and 35% or less. By placing the green compact 13 in the holes and overlapping the rubber dies, the green compact 13 is sealed in the spherical portion space 12 surrounded by the rubber dies. A hydrostatic pressure higher than the pressure at the time of forming is applied to the rubber dies. The rubber die 9 and the rubber die 10 to be used preferably have a Shore hardness Hs of 30 or more and 50 or less. With the hardness of the rubber dies in this range, the rubber dies can have a deformability that allows uniform contact between the surface of the green compact 13 and the rubber dies, thereby making it possible to uniformly apply compression to the green compact 13. This process can reduce the remaining crushed granulated powder.

It is preferable to place the green compact 13 such that the band-shaped portion 15 is parallel to the contact surface of the upper rubber die 10 and the lower rubber die 11 as illustrated in FIG 6. At this point, if L1 > L2, where L1 denotes a length of the spherical portion space 12 in the direction perpendicular to the contact surface; and L2 denotes a diameter on the contact surface, pressure is prevented from being applied to the spherical portion 6, making it possible to reduce the sintering density of the spherical portion 6, and the arithmetic average roughness of the spherical portion 6 (e.g., the arithmetic average roughness Rap of the pole 8) is increased. The same effect can be obtained even if the band-shaped portion 15 is perpendicular to the contact surface between the upper rubber die 10 and the lower rubber die 11 with L1 <L2.

Subsequently, a degreasing process is performed to degrease the green compact 13, in which the green compact 13 is heated at a temperature equal to or higher than the decomposition temperature of organic components such as binder to evaporate the organic components. The degreasing process may be performed in a nitrogen atmosphere or an air atmosphere. Through the degreasing process, a degreased compact can be obtained.

Next, a sintering process is performed to sinter the degreased compact. The sintering process is preferably performed at a temperature of 1600 degrees Celsius or more and 2000 degrees Celsius or less. The sintering process is preferably performed in a nitrogen atmosphere. The pressure during sintering is preferably in the range of atmospheric pressure or more and 300 MPa or less. Note that the atmospheric pressure is 0.10133 MPa (= 1 atm). The sintered body obtained by the sintering process may be subjected to a hot isostatic pressing (HIP) treatment. Through this step, the ceramic ball material 5 can be obtained. The ceramic ball material 5 is a ceramic sintered body having a theoretical density of 98% or more.

A ceramic ball can be manufactured by polishing the ceramic ball material 5. A typical polishing process for balls is machining using surface plate. For example, the ceramic ball material 5 is inserted into a cavity between parallel upper and lower surface plates. By the movement of the polishing surface plates, the ceramic ball material 5 is machined using surface plate into a perfect spherical shape. The surface roughness of bearing balls is specified in ASTM F2094. Depending on the application, bearing balls are graded according to ASTM F2094 and polished to a surface roughness Ra according to that grade. As the grade increases, some bearing balls are polished to a mirror finish with a surface roughness Ra of 0.01 µm or less. Note that ASTM refers to standards published by ASTM International, formerly known as American Society for Testing and Materials (ASTM).

Since Rab/Rap, a ratio of Rab to Rap, of the ceramic ball material 5 according to the embodiment is within a range of 0,7 or more and 1.0 or less, polishing of the pole 8 is started equivalently or preferentially to the band-shaped portion 7. To prevent the ceramic ball material 5 from being damaged in the polishing process, it is necessary to perform machining while paying attention to the contact of the band-shaped portion 7 with a grinding stone of, for example, a polishing surface plate.

In addition, the ceramic ball material 5 according to the embodiment has a ratio Rab/Rap between the pole 8 and the band-shaped portion 7 within a range of 0.7 or more and 1.0 or less. Accordingly, unevenness in density and microstructure inside the ceramic ball material is less likely to occur, thus preventing the occurrence of defects such as holes and abnormal structures on the bearing ball surface after machining.

### (Examples 1 to 9 and Comparative Examples 1 to 6)

Sintering aids, additives, solvents, and binders were added to the raw ceramic powder, then mixed, crushed, and granulated with a spray dryer. Examples 1 to 7 and Comparative Examples 1 to 4 were silicon nitride sintered bodies. Example 8 and Comparative Example 5 were aluminum oxide sintered bodies. Example 9 and Comparative Example 6 were silicon carbide sintered bodies. The silicon nitride sintered bodies contained silicon nitride in an amount of 85% by mass or more. The aluminum oxide sintered bodies contained aluminum oxide in an amount of 85% by mass or more. The silicon carbide sintered bodies contained silicon carbide in an amount of 85% by mass or more. When the main component and a sintering aid were each 100 parts by mass, the amount of binder added was 6 parts by mass. Paraffin wax and PVA were used as binders.

Next, press forming was performed using the resulting granulated powder, which was die forming using the upper and lower dies of a mold press forming apparatus as illustrated in FIG. 1. The press molds used were straight molds without convex portions in the center of the die 4 and molds with convex portions. The die forming was followed by isostatic pressure forming, which involved the use of a disk-shaped rubber die having a Shore hardness Hs of 30 or more and 50 or less. The green compact 13 was placed in the lower rubber die 11 such that the band-shaped portion 15 was substantially perpendicular to the contact surface of the rubber dies 10 and 11 as illustrated in FIG. 5 ("longitudinal band" in Table 1) and the band-shaped portion 15 was substantially parallel to the contact surface as illustrated in FIG. 6 ("transverse band" in Table 1). In this state, a hydrostatic pressure higher than the pressure at the time of forming was applied in the process of isostatic pressure forming.

Next, the green compact 13 was subjected to a degreasing and sintering process. The sintering process was performed at 1600 degrees Celsius to 2000 degrees Celsius at atmospheric pressure in a nitrogen atmosphere, followed by HIP treatment at 1600 degrees Celsius to 2000 degrees Celsius at a pressure of 200 MPa in a nitrogen atmosphere.

Through this process, the ceramic ball material according to the examples was produced. In Comparative Examples, PVA was used for the binder, and the press molds used were straight molds without convex portions in the center of the die, the green compact 13 was placed in the lower rubber die 11 such that the band-shaped portion 15 was substantially perpendicular to the contact surface of the rubber dies 10 and 11 as illustrated in FIG. 5.

Table 1 shows the manufacturing conditions for Examples and Comparative Examples.

**[Table 1]**

| | Ceramic Ball Material | | | |
|---|---|---|---|---|
| | Type of Sintered body | Diameter After Polishing Process [inch] | Diameter After Polishing Process [mm] | Width of Band-Shaped Portion [mm] |
| Example 1 | Si₃N₄ | 3/8 | 10.5 | 1.5 |
| Example 2 | Si₃N₄ | 3/8 | 10.5 | 1.5 |
| Example 3 | Si₃N₄ | 3/8 | 10.5 | 1.5 |
| Example 4 | Si₃N₄ | 3/8 | 10.5 | 1.5 |
| Example 5 | Si₃N₄ | 7/8 | 23.8 | 1.5 |
| Example 6 | Si₃N₄ | 1-3/16 | 34.1 | 1.5 |
| Example 7 | Si₃N₄ | 1-7/8 | 51.7 | 1.5 |
| Example 8 | Al₂O₃ | 3/8 | 10.5 | 1.5 |
| Example 9 | SiC | 3/8 | 10.5 | 1.5 |
| Comparative Example 1 | Si₃N₄ | 3/8 | 10.5 | 1.5 |
| Comparative Example 2 | Si₃N₄ | 7/8 | 23.8 | 1.5 |
| Comparative Example 3 | Si₃N₄ | 1-3/16 | 34.1 | 1.5 |
| Comparative Example 4 | Si₃N₄ | 1-7/8 | 51.7 | 1.5 |
| Comparative Example 5 | Al₂O₃ | 3/8 | 10.5 | 1.5 |
| Comparative Example 6 | SiC | 3/8 | 10.5 | 1.5 |

| | Type of Binder | Height H of Convex Portion of Die [mm] | Placement in Rubber Dies |
|---|---|---|---|
| Example 1 | Paraffin | 0.04 | Transverse band |
| Example 2 | Paraffin | 0.04 | Longitudinal Band |
| Example 3 | Paraffin | 0.00 | Transverse band |
| Example 4 | PVA | 0.04 | Transverse band |
| Example 5 | Paraffin | 0.04 | Longitudinal Band |
| Example 6 | Paraffin | 0.00 | Transverse band |
| Example 7 | PVA | 0.04 | Transverse band |
| Example 8 | Paraffin | 0.04 | Transverse band |
| Example 9 | Paraffin | 0.04 | Transverse band |
| Comparative Example 1 | PVA | 0.00 | Longitudinal Band |
| Comparative Example 2 | PVA | 0.00 | Longitudinal Band |
| Comparative Example 3 | PVA | 0.00 | Longitudinal Band |
| Comparative Example 4 | PVA | 0.00 | Longitudinal Band |
| Comparative Example 5 | PVA | 0.00 | Longitudinal Band |
| Comparative Example 6 | PVA | 0.00 | Longitudinal Band |

Examples 1 to 4, 8, and 9 and Comparative Examples 1, 5, and 6 were each a ceramic ball material for ceramic balls to be formed into 3/8 inches (9.525 mm) after the polishing process. Example 5 and Comparative Example 2 were each a ceramic ball material for ceramic balls of 7/8 inches (22.225 mm). Example 6 and Comparative Example 3 were each a ceramic ball material for ceramic balls of 1 to 3/16 inches (30.165 mm). Example 7 and Comparative Example 4 were each a ceramic ball material for ceramic balls of 1 to 7/8 inches (47.625 mm). The ceramic ball materials 5 of Examples 1 to 9 and the ceramic ball materials of Comparative Examples 1 to 6 could all be used as beating balls.

The arithmetic average roughness of the ceramic ball material 5 according to Examples 1 to 9 and the arithmetic average roughness of the ceramic ball material according to Comparative Examples 1 to 6 were measured. The respective measurement methods were as described above.

Comparative Examples 1 to 6 each had a ratio Rab/Rap out of the range, where Rab denotes the arithmetic average roughness of the band-shaped portion; and Rap denotes the arithmetic average roughness of the pole.

The ceramic ball materials 5 of Examples 1 to 9 and the ceramic ball materials of Comparative Examples 1 to 6 were used to evaluate the polishing efficiency. Polishing conditions for polishing each ceramic ball material were fixed using a ball processing polishing machine to examine the processed state of the band-shaped portion. The polishing conditions were as follows: no pressure was applied to the upper surface plate, the lower surface plate was rotated, and an abrasive using glycerin as a lubricant was supplied to diamond to perform processing for 24 hours. The ceramic balls of the same size were used under the same conditions of the gap distance from the upper surface plate, the number of the lower surface rotations, the quantity of ceramic ball materials to be fed, and the amount of the abrasive to be supplied.

After the above polishing process, the rate of occurrence of defects in the form of chipped ceramic ball materials was examined. The percentage of defects was calculated by visually inspecting one batch of the 100 samples using an optical microscope, and the rate of hole defects occurred was indicated as the percentage of hole defects [%]. In addition, the rate of structural abnormality occurred such as discoloration was indicated as the percentage of abnormal structures [%]. Table 2 shows the results.

**[Table 2]**

| | Reference Length U [mm] | Arithmetic Average Roughness Rab of Band-Shaped Portion [µm] | Arithmetic Average Roughness Rap of Spherical Portion [µm] |
|---|---|---|---|
| Example 1 | 1.5 | 0.46 | 0.48 |
| Example 2 | 1.5 | 0.45 | 0.53 |
| Example 3 | 1.5 | 0.44 | 0.55 |
| Example 4 | 1.5 | 0.43 | 0.59 |
| Example 5 | 3.0 | 0.49 | 0.56 |
| Example 6 | 5.0 | 0.49 | 0.49 |
| Example 7 | 10.0 | 0.55 | 0.67 |
| Example 8 | 1.5 | 0.52 | 0.57 |
| Example 9 | 1.5 | 0.57 | 0.67 |
| Comparative Example 1 | 1.5 | 0.50 | 0.48 |
| Comparative Example 2 | 3.0 | 0.54 | 0.47 |
| Comparative Example 3 | 5.0 | 0.59 | 0.49 |
| Comparative Example 4 | 10.0 | 0.61 | 0.50 |
| Comparative Example 5 | 1.5 | 0.59 | 0.56 |
| Comparative Example 6 | 1.5 | 0.68 | 0.65 |

| | Rab/Rap | Percentage [%] of Hole Defects | Percentage [%] of Abnormal Structures |
|---|---|---|---|
| Example 1 | 0.96 | 0 | 0 |
| Example 2 | 0.85 | 1 | 0 |
| Example 3 | 0.80 | 1 | 0 |
| Example 4 | 0.73 | 1 | 0 |
| Example 5 | 0.88 | 0 | 0 |
| Example 6 | 1.00 | 0 | 0 |
| Example 7 | 0.82 | 1 | 0 |
| Example 8 | 0.91 | 0 | 0 |
| Example 9 | 0.85 | 0 | 0 |
| Comparative Example 1 | 1.04 | 3 | 2 |
| Comparative Example 2 | 1.15 | 5 | 9 |
| Comparative Example 3 | 1.20 | 9 | 8 |
| Comparative Example 4 | 1.22 | 8 | 9 |
| Comparative Example 5 | 1.05 | 2 | 2 |
| Comparative Example 6 | 1.05 | 4 | 5 |

As can be seen from Table 2, in the ceramic ball materials 5 according to Examples 1 to 9, the percentage of hole defects [%] and the percentage of abnormal structures [%] were reduced. Therefore, in the ceramic ball materials 5 according to Examples 1 to 9 satisfying the conditions of the embodiment, the surface state after polishing could be good even though the polishing processability (polishing efficiency) was slightly reduced compared with that in Comparative Examples 1 to 6 in which Rab/Rap exceeded 1.03. Even if the polishing processability is slightly suppressed, it is preferable to satisfy the conditions of the embodiment when the surface state after polishing is prioritized.

As described above, the ceramic ball material 5 has suppressed microstructural unevenness during the sintering of ceramic materials to be subjected to powder press forming, thereby making it possible to provide a ceramic ball with a high yield in polishing.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A ceramic ball material comprising:
a spherical portion; and
a band-shaped portion formed over a circumference of a surface of the spherical portion, wherein
the ceramic ball material has a ratio Rab/Rap of 0.70 or more and 1.03 or less, where Rab denotes an arithmetic average roughness on an outer peripheral surface of the band-shaped portion; and Rap denotes an arithmetic average roughness on an outer peripheral surface of the spherical portion.

2. The ceramic ball material according to claim 1, wherein the arithmetic average roughness Rap on the outer peripheral surface of the spherical portion is an arithmetic average roughness on a pole of the outer peripheral surface of the spherical portion at a position farthest from a surface formed by a profile that extends in a circumferential direction of the outer peripheral surface formed by the band-shaped portion and passes through a center of the outer peripheral surface.

3. The ceramic ball material according to claim 1 or 2, wherein the spherical portion has an arbitrary diameter of 0.5 mm or more.

4. The ceramic ball material according to any one of claims 1 to 3, wherein the ceramic ball material comprises any one of aluminum oxide, silicon nitride, silicon carbide, boron nitride, and zirconium oxide in an amount of 85 mass% or more.

5. A ceramic ball obtained by polishing the ceramic ball material according to any one of claims 1 to 4.

6. A method for manufacturing a ceramic ball, comprising polishing the ceramic ball material according to any one of claims 1 to 4.
